# EUROPEAN PATENT APPLICATION

(11) **EP 4 040 702 A1**
(43) Date of publication of application: **10.08.2022**
(21) Application number: 20871423.8
(22) Date of filing: 27.09.2020
(51) Int. Cl.: H04L 5/00

(54) **METHODS AND APPARATUS FOR RECEIVING AND TRANSMITTING REFERENCE SIGNALS**

(30) Priority: 30.09.2019 CN 201910944574
(71) Applicant: ZTE Corporation, Shenzhen, Guangdong 518057 (CN)
(72) Inventor: GAO, Bo, Shenzhen, Guangdong 518057 (CN); LU, Zhaohua, Shenzhen, Guangdong 518057 (CN); LI, Yu Ngok, Shenzhen, Guangdong 518057 (CN); YAO, Ke, Shenzhen, Guangdong 518057 (CN)
(74) Representative: Deambrogi, Edgardo
(86) International application number: PCT/CN2020/118060
(87) International publication number: WO 2021/063280

(57) **Abstract**

Provided are methods and apparatuses for receiving and sending a reference signal. The receiving method includes: receiving first information sent by a second communication node, wherein the first information is used for indicating a signal parameter of a reference signal; and receiving, according to the first information, a reference signal sent by the second communication node.

## Description

This application claims priority to Chinese Patent Application No. 201910944574.7, filed with the China National Intellectual Property Administration on September 30, 2019, the disclosure of which is incorporated herein by reference in its entirety.

### Technical Field

The present disclosure relates to the field of communications, and for example, to methods and apparatuses for receiving and sending a reference signal.

### Background

In the related art, since a base station does not provide information related to a reference signal to User Equipment (UE), the UE cannot obtain the information related to the reference signal, thereby affecting the reception of the reference signal by the UE.

### Summary

Embodiments of the present disclosure provide methods and apparatuses for receiving and sending a reference signal, which can at least solve the problem in the related art that a UE cannot obtain information related to a reference signal and influences reception of the reference signal by the UE.

According to an embodiment of the present disclosure, provided is a method for receiving a reference signal performed by a first communication node. The method includes: receiving first information sent by a second communication node, wherein the first information is used for indicating a signal parameter of a reference signal; and receiving, according to the first information, the reference signal sent by the second communication node.

In at least one exemplary implementation, receiving, according to the first information, the reference signal sent by the second communication node includes: receiving, according to the first information and a Quasi Co-Location (QCL) state, the reference signal sent by the second communication node, wherein the reference signal is associated with at least two QCL states.

In at least one exemplary implementation, receiving, according to the first information, the reference signal sent by the second communication node further includes: in a case where a first QCL state associated with the reference signal includes first-type QCL information and second-type QCL information, associating the first information with the first-type QCL information, wherein the first-type QCL information includes at least one of: Doppler spread, Doppler shift, delay spread, average delay, and average gain, and the second-type QCL information includes a spatial parameter feature.

In at least one exemplary implementation, in a case where a first QCL state associated with the reference signal includes first-type QCL information and second-type QCL information, a basis reference signal associated with the first-type QCL information is the same as a basis reference signal associated with the second-type QCL information.

In at least one exemplary implementation, the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

In at least one exemplary implementation, the first signaling includes Media Access Control-Control Element (MAC-CE) signaling or Radio Resource Control (RRC) signaling.

In at least one exemplary implementation, the method further includes: receiving the first signaling; and activating, according to the first signaling, a QCL state associated with a physical downlink shared channel.

In at least one exemplary implementation, the method further includes: determining, according to the first information, a signal-to-interference-plus-noise ratio and/or a reference signal received power, and sending the determined signal-to-interference-plus-noise ratio and/or reference signal received power to the second communication node.

In at least one exemplary implementation, determining, according to the first information, the signal-to-interference-plus-noise ratio and/or the reference signal received power includes: determining, according to a power parameter of the reference signal contained in the first information, the signal-to-interference-plus-noise ratio and/or the reference signal received power.

In at least one exemplary implementation, determining, according to the first information, the signal-to-interference-plus-noise ratio and/or the reference signal received power further includes: determining the signal-to-interference-plus-noise ratio and/or the reference signal received power according to a measured signal-to-interference-plus-noise ratio and/or a measured reference signal received power and a power parameter of the reference signal contained in the first information.

In at least one exemplary implementation, a step associated with a report codeword of the signal-to-interference-plus-noise ratio is determined by at least one of: a reference signal type associated with the signal-to-interference-plus-noise ratio, and a report type associated with the signal-to-interference-plus-noise ratio.

In at least one exemplary implementation, the reference signal type may include at least one of: a zero-power channel state information reference signal for interference measurement; a non-zero-power channel state information reference signal for interference measurement; a zero-power channel state information reference signal for interference measurement and a non-zero-power channel state information reference signal for interference measurement; and a reference signal for channel measurement, wherein the reference signal for channel measurement includes a synchronization signal or a channel state information reference signal.

In at least one exemplary implementation, the report type includes: a group-based beam report, and a group-based beam report not enabled.

In at least one exemplary implementation, the reference signal includes a channel state information reference signal for channel measurement and/or a channel state information reference signal for interference measurement.

In at least one exemplary implementation, the first information includes at least one of: a power parameter of the reference signal, a phase parameter of the reference signal, a number of ports of the reference signal, and a number of ports of a phase tracking reference signal.

In at least one exemplary implementation, the phase parameter of the reference signal includes at least one of: relative phase information of a basis reference signal to the reference signal, relative phase information between reference signals, and phase information of the reference signal.

In at least one exemplary implementation, the power parameter of the reference signal includes at least one of: a sending power of the reference signal, relative power information of a basis reference signal to the reference signal, relative power information of the reference signal to a target signal, an additional offset of a measurement result of the reference signal, and a power offset.

In at least one exemplary implementation, in a case where the reference signal is a demodulation reference signal, the phase parameter of the reference signal includes: phase information of a port of the demodulation reference signal to a port of a channel, or phase information of a port of the demodulation reference signal to a layer of a channel.

In at least one exemplary implementation, in a case where the first information includes the number of the ports of the phase tracking reference signal, the method further includes: determining, according to the number of the ports of the phase tracking reference signal, a corresponding relationship between the ports of the phase tracking reference signal and ports of a demodulation reference signal.

In at least one exemplary implementation, in a case where the first information does not include the power parameter of the reference signal, the power parameter is a specified value or is set to be 0.

In at least one exemplary implementation, in a case where the first information does not include the phase parameter of the reference signal, the phase parameter is a specified value or is set to be 0.

In at least one exemplary implementation, the reference signal includes at least one of: a reference signal resource, a reference signal port, and a reference signal port group.

In at least one exemplary implementation, the first information is information associated with an antenna group and/or a beam group.

In at least one exemplary implementation, the reference signal includes one of: a channel state information reference signal, a channel state information interference measurement signal, a demodulation reference signal, or a phase tracking reference signal.

According to another embodiment of the present disclosure, provided is a method for sending a reference signal performed by a second communication node. The method includes: sending first information, wherein the first information is used for indicating a signal parameter of a reference signal, and the first information is used for indicating a first communication node to receive, according to the first information, the reference signal sent by the second communication node; and sending the reference signal.

In at least one exemplary implementation, the first information is used for indicating the first communication node to receive, according to the first information and a QCL state, the reference signal sent by the second communication node, wherein the reference signal is associated with two or more QCL states.

In at least one exemplary implementation, the first information is used for indicating the first communication node to associate, in a case where a first QCL state associated with the reference signal includes first-type QCL information and second-type QCL information, the first information with the first-type QCL information, wherein the first-type QCL information includes at least one of: Doppler spread, Doppler shift, delay spread, average delay, and average gain, and the second-type QCL information includes a spatial parameter feature.

In at least one exemplary implementation, in a case where a first QCL state associated with the reference signal includes first-type QCL information and second-type QCL information, a basis reference signal associated with the first-type QCL information is the same as a reference signal associated with the second-type QCL information.

In at least one exemplary implementation, the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

In at least one exemplary implementation, the first signaling includes MAC-CE signaling or RRC signaling.

In at least one exemplary implementation, the first information includes at least one of: a power parameter of the reference signal, a phase parameter of the reference signal, a number of ports of the reference signal, and a number of ports of a phase tracking reference signal.

In at least one exemplary implementation, the phase parameter of the reference signal includes at least one of: relative phase information of a basis reference signal to the reference signal, relative phase information between reference signals, and phase information of the reference signal.

In at least one exemplary implementation, the power parameter of the reference signal includes at least one of: a sending power of the reference signal, relative power information of a basis reference signal to the reference signal, relative power information of the reference signal to a target signal, an additional offset of a measurement result of the reference signal, and a power offset.

In at least one exemplary implementation, in a case where the reference signal is a demodulation reference signal, the phase parameter of the reference signal includes: phase information of a port of the demodulation reference signal to a port of a channel, or phase information of a port of the demodulation reference signal to a layer of a channel.

In at least one exemplary implementation, in a case where the first information includes the number of the ports of the phase tracking reference signal, the method further includes: determining, according to the number of the ports of the phase tracking reference signal, a corresponding relationship between the ports of the phase tracking reference signal and ports of a demodulation reference signal.

In at least one exemplary implementation, in a case where the first information does not include the power parameter of the reference signal, the power parameter is a specified value or is set to 0.

In at least one exemplary implementation, in a case where the first information does not include the phase parameter of the reference signal, the phase parameter is a specified value or is set to 0.

In at least one exemplary implementation, the reference signal includes at least one of: a reference signal resource, a reference signal port, and a reference signal port group.

In at least one exemplary implementation, the first information is information associated with an antenna group and/or a beam group.

In at least one exemplary implementation, the reference signal includes one of: a channel state information reference signal, a channel state information interference measurement signal, a demodulation reference signal, or a phase tracking reference signal.

According to still another embodiment of the present disclosure, provided is an apparatus for receiving a reference signal, including: a first receiving module, configured to receive first information sent by a second communication node, wherein the first information is used for indicating a signal parameter of a reference signal; and a second receiving module, configured to receive, according to the first information, the reference signal sent by the second communication node.

In at least one exemplary implementation, the second receiving module includes: a first receiving sub-module, configured to receive, according to the first information and a QCL state, the reference signal sent by the second communications node, wherein the reference signal is associated with two or more QCL states.

In at least one exemplary implementation, the second receiving module further includes: a second receiving sub-module, configured to associate, in a case where a first QCL state associated with the reference signal includes first-type QCL information and second-type QCL information, the first information with the first-type QCL information, wherein the first-type QCL information includes at least one of: Doppler spread, Doppler shift, delay spread, average delay, and average gain, and the second-type QCL information includes a spatial parameter feature.

In at least one exemplary implementation, in a case where a first QCL state associated with the reference signal includes first-type QCL information and second-type QCL information, a basis reference signal associated with the first-type QCL information is the same as a basis reference signal associated with the second-type QCL information.

In at least one exemplary implementation, the apparatus further includes: a determining module, configured to determine, according to the first information, a signal-to-interference-plus-noise ratio and/or reference signal received power; and a sending module, configured to send the determined signal-to-interference-plus-noise ratio and/or reference signal received power to the second communication node.

In at least one exemplary implementation, the first information includes at least one of: a power parameter of the reference signal, a phase parameter of the reference signal, a number of ports of the reference signal, and a number of ports of a phase tracking reference signal.

According to still another embodiment of the present disclosure, provided is an apparatus for sending a reference signal, including: a first sending module, configured to send first information, wherein the first information is used for indicating a signal parameter of a reference signal, and the first information is used for indicating a first communication node to receive, according to the first information, the reference signal sent by a second communication node; and a second sending module, configured to send the reference signal.

In at least one exemplary implementation, the first information is used for indicating the first communication node to receive, according to the first information and a QCL state, the reference signal sent by the second communication node, wherein the reference signal is associated with two or more QCL states.

In at least one exemplary implementation, the first information is used for indicating the first communication node to associate, in a case where a first QCL state associated with the reference signal includes first-type QCL information and second-type QCL information, the first information with the first-type QCL information, wherein the first-type QCL information includes at least one of: Doppler spread, Doppler shift, delay spread, average delay, and average gain, and the second-type QCL information includes a spatial parameter feature.

In at least one exemplary implementation, the first information includes at least one of: a power parameter of the reference signal, a phase parameter of the reference signal, a number of ports of the reference signal, and a number of ports of a phase tracking reference signal.

According to still another embodiment of the present disclosure, provided is a computer-readable storage medium. The computer-readable storage medium stores a computer program, and the computer program executes the operations in any one of the embodiments of the method for receiving a reference signal at runtime.

According to still another embodiment of the present disclosure, provided is a computer-readable storage medium. The computer-readable storage medium stores a computer program, and the computer program executes the operations in any one of the embodiments of the method for sending a reference signal at runtime.

According to still another embodiment of the present disclosure, provided is an electronic device, including a memory and a processor, wherein the memory stores a computer program, and the processor is configured to run the computer program to execute the operations in any one of the described embodiments of the method for receiving a reference signal.

According to still another embodiment of the present disclosure, provided is an electronic device, including a memory and a processor, wherein the memory stores a computer program, and the processor is configured to run the computer program to execute the operations in any one of the described embodiments of the method for sending a reference signal.

By means of the embodiments of the present disclosure, first information sent by a second communication node is received, wherein the first information is used for indicating a signal parameter of a reference signal; and the reference signal sent by the second communication node is received according to the first information. By means of the solution, the problem in the related art that a UE cannot obtain information related to a reference signal influences reception of the reference signal by the UE can be solved, and the effect of improving reception efficiency of the reference signal can be achieved.

### Brief Description of the Drawings

Drawings, provided for further understanding of the present disclosure and forming a part of the present disclosure, are used to explain the present disclosure together with embodiments of the present disclosure rather than to limit the present disclosure. In the drawings:
Fig. 1 is a hardware structure block diagram of a mobile terminal for implementing a method for receiving a reference signal according to an embodiment of the present disclosure;
Fig. 2 is a flowchart of a method for receiving a reference signal according to an embodiment of the present disclosure;
Fig. 3 is a flowchart of a method for sending a reference signal according to an embodiment of the present disclosure;
Fig. 4 is a structure diagram of an apparatus for receiving a reference signal according to an embodiment of the present disclosure;
Fig. 5 is a structure diagram of an apparatus for sending a reference signal according to an embodiment of the present disclosure;
Fig. 6 is a schematic structural diagram of a hybrid precoding (beamforming) transceiver according to an exemplary embodiment of the present disclosure;
Fig. 7 is a schematic diagram of downlink transmission of a plurality of antenna groups according to an exemplary embodiment of the present disclosure;
Fig. 8 is a schematic diagram of downlink transmission under multi-QCL-state indication according to an exemplary embodiment of the present disclosure;
Fig. 9 is a schematic diagram of another downlink transmission under multi-QCL-state indication according to an exemplary embodiment of the present disclosure;
Fig. 10 is a schematic diagram of a QCL state under a phase and power parameter configuration according to an exemplary embodiment of the present disclosure;
Fig. 11 is a schematic diagram of a framework of non-periodic CSI trigger state configuration in the related art;
Fig. 12 is a schematic diagram of a framework of trigger state-oriented phase and power parameter configuration according to an exemplary embodiment of the present disclosure;
Fig. 13 is a schematic diagram of a framework of CSI reporting configuration-oriented phase and power parameter configuration according to an exemplary embodiment of the present disclosure; and
Fig. 14 is a flowchart of activating a power parameter by a MAC-CE according to an exemplary embodiment of the present disclosure.

### Detailed Description

The present disclosure will be described below with reference to the drawings and embodiments.

It should be noted that the terms "first" and "second" in the description, claims, and accompanying drawings of the present disclosure are used to distinguish similar objects, and are not necessarily used to describe a specific sequence or order.

### Embodiment 1

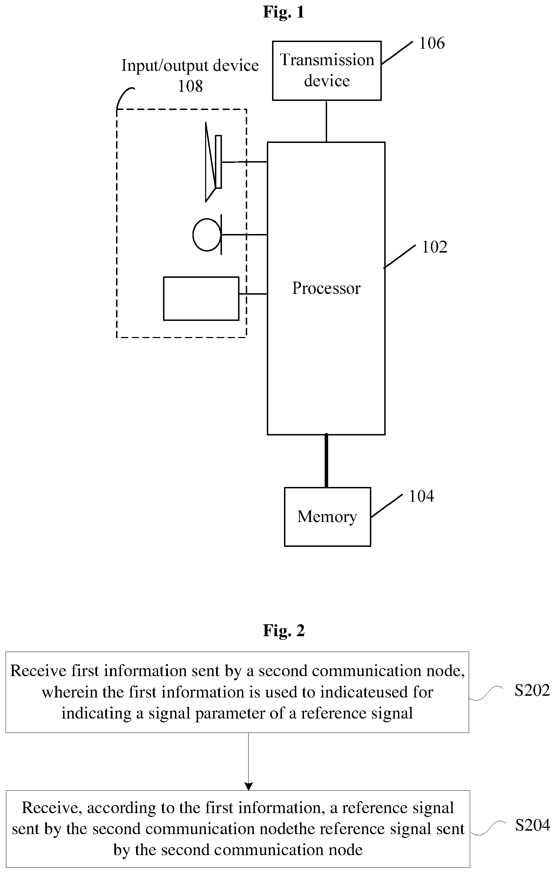

The method embodiment provided in Embodiment 1 of the present disclosure may be implemented in a mobile terminal, a computer terminal, or a similar computing device. Taking the implementation on a mobile terminal as an example, Fig. 1 is a hardware structure block diagram of a mobile terminal for implementing a method for receiving a reference signal according to an embodiment of the present disclosure. As shown in Fig. 1, a mobile terminal 10 may include one or more processors 102 (only one is shown in Fig. 1) (the processors 102 may include, but are not limited to, processing devices such as a Micro Control Unit (MCU) or a Field Programmable Gate Array (FPGA)) and a memory 104 for storing data. In at least one exemplary implementation, the mobile terminal may further include a transmission device 106 and an input/output device 108 for a communication function. A person having ordinary skill in the art can understand that the structure shown in Fig. 1 is merely exemplary, and does not limit the structure of the foregoing mobile terminal. For example, the mobile terminal 10 may also include more or fewer components than shown in Fig. 1, or have a different configuration than that shown in Fig. 1.

The memory 104 may be configured to store a computer program, for example, a software program and a module of application software, such as a computer program corresponding to the method for receiving a reference signal in the embodiments of the present disclosure. The processor 102 runs the computer program stored in the memory 104 to execute various function applications and data processing, that is, to implement the foregoing method. The memory 104 may include high-speed random access memory, and may also include non-volatile memory, such as one or more magnetic storage devices, flash memories, or other non-volatile solid-state memories. In some examples, the memory 104 may further include a memory remotely located from the processor 102 and connected to the mobile terminal 10 over a network. Some examples of such network include, but are not limited to, Internet, an intranet, a local area network, a mobile communication network, and combinations thereof.

The transmission device 106 is configured to receive or send data via a network. Specific examples of the described network may include a wireless network provided by a communication provider of the mobile terminal 10. In one example, the transmission device 106 may include a Network Interface Controller (NIC) that may be connected to other network devices via a base station to communicate with the Internet. In one example, the transmission device 106 may be a Radio Frequency (RF) module for communicating wirelessly with the Internet.

The present embodiment provides a method for receiving a reference signal operating in the described mobile terminal. Fig. 2 is a flowchart of a method for receiving a reference signal according to an embodiment of the present disclosure. As shown in Fig. 2, the flow includes the following operations S202 and S204.

At S202, first information sent by a second communication node is received, wherein the first information is used for indicating a signal parameter of a reference signal.

At S204, the reference signal sent by the second communications node is received according to the first information.

By means of the operations, first information sent by a second communication node is received, wherein the first information is used for indicating a signal parameter of a reference signal; and the reference signal sent by the second communication node is received according to the first information. By means of the solution, the problem in the related art that a UE cannot obtain information related to a reference signal influences reception of the reference signal by the UE can be solved, and the effect of improving reception efficiency of the reference signal can be achieved.

In at least one exemplary implementation, the entity for executing the foregoing operations may be a terminal, but is not limited thereto.

In an exemplary implementation, the operation that the reference signal sent by the second communications node is received according to the first information includes: the reference signal sent by the second communication node is received according to the first information and a QCL state, wherein the reference signal is associated with two or more QCL states.

In an exemplary implementation, the operation that the reference signal sent by the second communications node is received according to the first information further includes: in a case where a first QCL state associated with the reference signal includes first-type QCL information and second-type QCL information, the first information is associated with the first-type QCL information, wherein the first-type QCL information includes at least one of: Doppler spread, Doppler shift, delay spread, average delay, and average gain, and the second-type QCL information includes a spatial parameter feature.

In an exemplary implementation, in a case where a first QCL state associated with the reference signal includes first-type QCL information and second-type QCL information, a basis reference signal associated with the first-type QCL information is the same as a basis reference signal associated with the second-type QCL information.

In an exemplary implementation, the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

In an exemplary implementation, the first signaling includes MAC-CE signaling or RRC signaling.

In an exemplary implementation, the method further includes: the first signaling is received; and a QCL state associated with a physical downlink shared channel is activated according to the first signaling.

In an exemplary implementation, the method further includes: a signal-to-interference-plus-noise ratio and/or a reference signal received power is determined according to the first information, and the determined signal-to-interference-plus-noise ratio and/or reference signal received power is sent to the second communications node.

In an exemplary implementation, the operation that the signal-to-interference-plus-noise ratio and/or the reference signal received power is determined according to the first information includes: the signal-to-interference-plus-noise ratio and/or reference signal received power is determined according to a power parameter of the reference signal contained in the first information.

In an exemplary implementation, the operation that the signal-to-interference-plus-noise ratio and/or the reference signal received power is determined according to the first information further includes: the signal-to-interference-plus-noise ratio and/or the reference signal received power is determined according to a measured signal-to-interference-plus-noise ratio and/or a measured reference signal received power and a power parameter of the reference signal contained in the first information.

In an exemplary implementation, a step associated with a report codeword of the signal-to-interference-plus-noise ratio is determined by at least one of: a reference signal type associated with the signal-to-interference-plus-noise ratio; and a report type associated with the signal-to-interference-plus-noise ratio.

In an exemplary implementation, the reference signal type includes at least one of: a zero-power channel state information reference signal for interference measurement; a non-zero-power channel state information reference signal for interference measurement; a zero-power channel state information reference signal for interference measurement and a non-zero-power channel state information reference signal for interference measurement; and a reference signal for channel measurement, wherein the reference signal for channel measurement includes a synchronization signal or a channel state information reference signal.

In an exemplary implementation, the report type includes: a group-based beam report, and a group-based beam report not enabled.

In an exemplary implementation, the reference signal includes: a channel state information reference signal for channel measurement and/or a channel state information reference signal for interference measurement.

In an exemplary implementation, the first information includes at least one of: a power parameter of the reference signal, a phase parameter of the reference signal, a number of ports of the reference signal, and a number of ports of a phase tracking reference signal.

In an exemplary implementation, the phase parameter of the reference signal includes at least one of: relative phase information of a basis reference signal to the reference signal, relative phase information between reference signals, and phase information of the reference signal.

In an exemplary implementation, the power parameter of the reference signal includes at least one of: a sending power of the reference signal, relative power information of a basis reference signal to the reference signal, relative power information of the reference signal to a target signal, an additional offset of a measurement result of the reference signal, and a power offset.

In an exemplary implementation, in a case where the reference signal is a demodulation reference signal, the phase parameter of the reference signal includes: phase information of a port of the demodulation reference signal to a port of a channel, or phase information of a port of the demodulation reference signal to a layer of a channel.

In an exemplary implementation, in a case where the first information includes the number of the ports of the phase tracking reference signal, the method further includes: a corresponding relationship between the ports of the phase tracking reference signal and ports of a demodulation reference signal is determined according to the number of the ports of the phase tracking reference signal.

In an exemplary implementation, in a case where the first information does not include the power parameter of the reference signal, the power parameter is a specified value or is set to 0.

In an exemplary implementation, in a case where the first information does not include the phase parameter of the reference signal, the phase parameter is a specified value or is set to 0.

In an exemplary implementation, the reference signal includes at least one of: a reference signal resource, a reference signal port, and a reference signal port group.

In an exemplary implementation, the first information is information associated with an antenna group and/or a beam group.

In an exemplary implementation, the reference signal includes one of: a channel state information reference signal, a channel state information interference measurement signal, a demodulation reference signal, or a phase tracking reference signal.

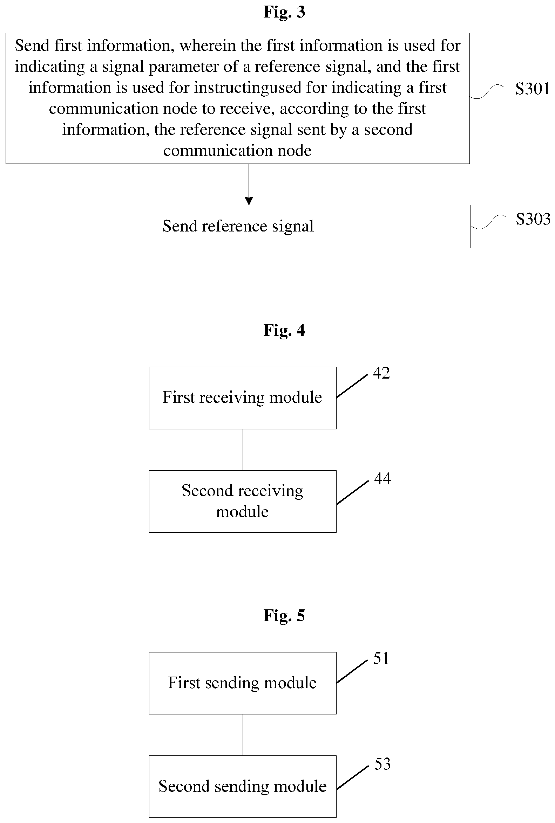

According to another embodiment of the present disclosure, provided is a method for sending a reference signal performed by a second communication node, such as a base station. Fig. 3 is a flowchart of a method for sending a reference signal according to an embodiment of the present disclosure. As shown in Fig. 3, the method for sending a reference signal includes the following operations S301 and S303.

At S301, first information is sent, wherein the first information is used for indicating a signal parameter of a reference signal, and the first information is used for indicating a first communication node to receive, according to the first information, the reference signal sent by the second communication node.

At S303, the reference signal is sent.

By means of the described operations, first information is sent, wherein the first information is used for indicating a signal parameter of a reference signal, and the first information is used for indicating a first communication node to receive, according to the first information, the reference signal sent by the second communication node; and the reference signal is sent. By means of the solution, the problem in the related art that a UE cannot obtain information related to a reference signal influences reception of the reference signal by the UE can be solved, and the effect of improving reception efficiency of the reference signal can be achieved.

In an exemplary implementation, the first information is used for indicating the first communication node to receive, according to the first information and a QCL state, the reference signal sent by the second communication node, wherein the reference signal is associated with at least two QCL states.

In an exemplary implementation, the first information is used for indicating the first communication node to associate, in a case where a first QCL state associated with the reference signal includes first-type QCL information and second-type QCL information, the first information with the first-type QCL information, wherein the first-type QCL information includes at least one of: Doppler spread, Doppler shift, delay spread, average delay, and average gain, and the second-type QCL information includes a spatial parameter feature.

In an exemplary implementation, in a case where a first QCL state associated with the reference signal includes first-type QCL information and second-type QCL information, a basis reference signal associated with the first-type QCL information is the same as a basis reference signal associated with the second-type QCL information.

In an exemplary implementation, the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

In an exemplary implementation, the first signaling includes MAC-CE signaling or RRC signaling.

In an exemplary implementation, the first signaling is further used for indicating the first communication node to activate, according to the first signaling, a QCL state associated with a physical downlink shared channel.

In an exemplary implementation, the first information is further used for indicating the first communications node to determine, according to the first information, a signal-to-interference-plus-noise ratio and/or a reference signal received power, and send the determined signal-to-interference-plus-noise ratio and/or reference signal received power to the second communications node.

In an exemplary implementation, the first information is further used for indicating the first communication node to determine, according to a power parameter of the reference signal contained in the first information, the signal-to-interference-plus-noise ratio and/or the reference signal received power.

In an exemplary implementation, the first information is further used for indicating the first communication node to determine the signal-to-interference-plus-noise ratio and/or the reference signal received power according to a measured signal-to-interference-plus-noise ratio and/or a measured reference signal received power and a power parameter of the reference signal contained in the first information.

In an exemplary implementation, a step associated with a report codeword of the signal-to-interference-plus-noise ratio is determined by at least one of: a reference signal type associated with the signal-to-interference-plus-noise ratio; and a report type associated with the signal-to-interference-plus-noise ratio.

In an exemplary implementation, the reference signal type includes at least one of: a zero-power channel state information reference signal for interference measurement; a non-zero-power channel state information reference signal for interference measurement; a zero-power channel state information reference signal for interference measurement and a non-zero-power channel state information reference signal for interference measurement; and a reference signal for channel measurement, wherein the reference signal for channel measurement includes a synchronization signal or a channel state information reference signal.

In an exemplary implementation, the report type includes: a group-based beam report, and a group-based beam report not enabled.

In an exemplary implementation, the reference signal includes: a channel state information reference signal for channel measurement and/or a channel state information reference signal for interference measurement.

In an exemplary implementation, the first information includes at least one of: a power parameter of the reference signal, a phase parameter of the reference signal, a number of ports of the reference signal, and a number of ports of a phase tracking reference signal.

In an exemplary implementation, the phase parameter of the reference signal includes at least one of: relative phase information of a basis reference signal to the reference signal, relative phase information between reference signals, and phase information of the reference signal.

In an exemplary implementation, the power parameter of the reference signal includes at least one of: a sending power of the reference signal, relative power information of a basis reference signal to the reference signal, relative power information of the reference signal to a target signal, an additional offset of a measurement result of the reference signal, and a power offset.

In an exemplary implementation, in a case where the reference signal is a demodulation reference signal, the phase parameter of the reference signal includes: phase information of a port of the demodulation reference signal to a port of a channel, or phase information of a port of the demodulation reference signal to a layer of a channel.

In an exemplary implementation, in a case where the first information includes the number of the ports of the phase tracking reference signal, the method further includes: a corresponding relationship between the ports of the phase tracking reference signal and ports of a demodulation reference signal is determined according to the number of the ports of the phase tracking reference signal.

In an exemplary implementation, in a case where the first information does not include the power parameter of the reference signal, the power parameter is a specified value or is set to 0.

In an exemplary implementation, in a case where the first information does not include the phase parameter of the reference signal, the phase parameter is a specified value or is set to 0.

In an exemplary implementation, the reference signal includes at least one of: a reference signal resource, a reference signal port, and a reference signal port group.

In an exemplary implementation, the first information is information associated with an antenna group and/or a beam group.

In an exemplary implementation, the reference signal includes one of: a channel state information reference signal, a channel state information interference measurement signal, a demodulation reference signal, or a phase tracking reference signal.

The present embodiment also provides an apparatus for receiving a reference signal. The apparatus is used for implementing the described embodiments and exemplary implementations, and what has been described will not be elaborated. The term "module", as used hereinafter, is a combination of software and/or hardware capable of realizing a predetermined function. Although the apparatus described in the following embodiments may be implemented by software, implementation by hardware or a combination of software and hardware is also possible and conceivable.

Fig. 4 is a structure diagram of an apparatus for receiving a reference signal according to an embodiment of the present disclosure. As shown in Fig. 4, the apparatus includes: a first receiving module 42, configured to receive first information sent by a second communication node, wherein the first information is used for indicating a signal parameter of a reference signal; and a second receiving module 44, configured to receive, according to the first information, the reference signal sent by the second communication node.

By means of the described modules, first information sent by a second communication node is received, wherein the first information is used for indicating a signal parameter of a reference signal; and the reference signal sent by the second communication node is received according to the first information. By means of the solution, the problem in the related art that a UE cannot obtain information related to a reference signal influences reception of the reference signal by the UE can be solved, and the effect of improving reception efficiency of the reference signal can be achieved.

In an exemplary implementation, the second receiving module includes: a first receiving sub-module, configured to receive, according to the first information and a QCL state, the reference signal sent by the second communications node, wherein the reference signal is associated with two or more QCL states.

In an exemplary implementation, the second receiving module further includes: a second receiving sub-module, configured to associate, in a case where a first QCL state associated with the reference signal includes first-type QCL information and second-type QCL information, the first information with the first-type QCL information, wherein the first-type QCL information includes at least one of: Doppler spread, Doppler shift, delay spread, average delay, and average gain, and the second-type QCL information includes a spatial parameter feature.

In an exemplary implementation, in a case where a first QCL state associated with the reference signal includes first-type QCL information and second-type QCL information, a basis reference signal associated with the first-type QCL information is the same as a basis reference signal associated with the second-type QCL information.

In an exemplary implementation, the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

In an exemplary implementation, the first signaling includes: MAC-CE signaling or RRC signaling.

In an exemplary implementation, the first receiving module further includes: a third receiving sub-module, configured to receive the first signaling; and an activating sub-module, configured to activate, according to the first signaling, a QCL state associated with a physical downlink shared channel.

In an exemplary implementation, the apparatus further includes: a determining module, configured to determine, according to the first information, a signal-to-interference-plus-noise ratio and/or a reference signal received power; and a sending module, configured to send the determined signal-to-interference-plus-noise ratio and/or reference signal received power to the second communications node.

In an exemplary implementation, the determining module includes: a first determining sub-module, configured to determine, according to a power parameter of the reference signal contained in the first information, a signal-to-interference-plus-noise ratio and/or a reference signal received power.

In an exemplary implementation, the determining module further includes: a second determining sub-module, configured to determine, according to a measured signal-to-interference-plus-noise ratio and/or a measured reference signal received power and a power parameter of the reference signal contained in the first information, the signal-to-interference-plus-noise ratio and/or the reference signal received power.

In an exemplary implementation, a step associated with a report codeword of the signal-to-interference-plus-noise ratio is determined by at least one of: a reference signal type associated with the signal-to-interference-plus-noise ratio; and a report type associated with the signal-to-interference-plus-noise ratio.

In an exemplary implementation, the reference signal type includes at least one of: a zero-power channel state information reference signal for interference measurement; a non-zero-power channel state information reference signal for interference measurement; a zero-power channel state information reference signal for interference measurement and a non-zero-power channel state information reference signal for interference measurement; and a reference signal for channel measurement, wherein the reference signal for channel measurement includes a synchronization signal or a channel state information reference signal.

In an exemplary implementation, the report type includes: a group-based beam report, and a group-based beam report not enabled.

In an exemplary implementation, the first information includes at least one of: a power parameter of the reference signal, a phase parameter of the reference signal, a number of ports of the reference signal, and a number of ports of a phase tracking reference signal.

It should be noted that each module may be implemented by software or hardware. The latter may be implemented in the following manner, but is not limited thereto. All the modules are located in a same processor; alternatively, the modules are located in different processors in an arbitrary combination.

The present embodiment also provides an apparatus for sending a reference signal. The apparatus is used for implementing the described embodiments and exemplary implementations, and what has been described will not be elaborated. The term "module", as used hereinafter, is a combination of software and/or hardware capable of realizing a predetermined function. Although the apparatus described in the following embodiments may be implemented by software, implementation by hardware or a combination of software and hardware is also possible and conceivable.

Fig. 5 is a structure diagram of an apparatus for sending a reference signal according to an embodiment of the present disclosure. As shown in Fig. 5, the apparatus includes: a first sending module 51, configured to send first information, wherein the first information is used for indicating a signal parameter of a reference signal, and the first information is used for indicating a first communication node to receive, according to the first information, the reference signal sent by a second communication node; and a second sending module 53, configured to send the reference signal.

By means of the described modules, first information is sent, wherein the first information is used for indicating a signal parameter of a reference signal, and the first information is used for indicating a first communication node to receive, according to the first information, the reference signal sent by a second communication node. By means of the solution, the problem in the related art that a UE cannot obtain information related to a reference signal influences reception of the reference signal by the UE can be solved, and the effect of improving reception efficiency of the reference signal can be achieved.

In an exemplary implementation, the first information is used for indicating the first communication node to receive, according to the first information and a QCL state, the reference signal sent by the second communication node, wherein the reference signal is associated with two or more QCL states.

In an exemplary implementation, the first information is used for indicating the first communication node to associate, in a case where a first QCL state associated with the reference signal includes first-type QCL information and second-type QCL information, the first information with the first-type QCL information, wherein the first-type QCL information includes at least one of: Doppler spread, Doppler shift, delay spread, average delay, and average gain, and the second-type QCL information includes a spatial parameter feature.

In an exemplary implementation, in a case where a first QCL state associated with the reference signal includes first-type QCL information and second-type QCL information, a basis reference signal associated with the first-type QCL information is the same as a basis reference signal associated with the second-type QCL information.

In an exemplary implementation, the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

In an exemplary implementation, the first signaling includes: MAC-CE signaling or RRC signaling.

In an exemplary implementation, the first signaling is further used for indicating the first communication node to activate, according to the first signaling, a QCL state associated with a physical downlink shared channel.

In an exemplary implementation, the first information is further used for indicating the first communications node to determine, according to the first information, a signal-to-interference-plus-noise ratio and/or a reference signal received power, and send the determined signal-to-interference-plus-noise ratio and/or reference signal received power to the second communications node.

In an exemplary implementation, the first information is further used for indicating the first communication node to determine, according to a power parameter of the reference signal contained in the first information, the signal-to-interference-plus-noise ratio and/or the reference signal received power.

In an exemplary implementation, the first information is further used for indicating the first communication node to determine the signal-to-interference-plus-noise ratio and/or the reference signal received power according to a measured signal-to-interference-plus-noise ratio and/or a measured reference signal received power and a power parameter of the reference signal contained in the first information.

In an exemplary implementation, a step associated with a report codeword of the signal-to-interference-plus-noise ratio is determined by at least one of: a reference signal type associated with the signal-to-interference-plus-noise ratio, and a report type associated with the signal-to-interference-plus-noise ratio.

In an exemplary implementation, the reference signal type includes at least one of: a zero-power channel state information reference signal for interference measurement; a non-zero-power channel state information reference signal for interference measurement; a zero-power channel state information reference signal for interference measurement and a non-zero-power channel state information reference signal for interference measurement; and a reference signal for channel measurement, wherein the reference signal for channel measurement includes a synchronization signal or a channel state information reference signal.

In an exemplary implementation, the report type includes: a group-based beam report, and a group-based beam report not enabled.

In an exemplary implementation, the reference signal includes: a channel state information reference signal for channel measurement and/or a channel state information reference signal for interference measurement.

In an exemplary implementation, the first information includes at least one of: a power parameter of the reference signal, a phase parameter of the reference signal, a number of ports of the reference signal, and a number of ports of a phase tracking reference signal.

It should be noted that each module may be implemented by software or hardware. The latter may be implemented in the following manner, but is not limited thereto. All the modules are located in a same processor; alternatively, the modules are located in different processors in an arbitrary combination.

### EXEMPLARY EMBODIMENTS

The embodiments of the present disclosure will be further explained and illustrated below with reference to specific scenarios.

A high frequency band with ultra-wide bandwidth (namely, millimeter wave communication) has become an important development direction of mobile communications in the future, and attracts the attentions of academic and industry all over the word. In particular, as spectrum resources become increasingly congested and a large number of physical networks are deployed nowadays, the advantages of millimeter waves become increasingly attractive, and many standard organizations, such as the Institute of Electrical and Electronics Engineers (IEEE) and 3rd Generation Partnership Project (3GPP) start to work on the corresponding standardization. For example, in the 3GPP standard group, high frequency band communication has become an important innovative point of the 5th generation (5G) and the New Radio Access Technology (New RAT) taking advantage of its large bandwidth.

In an exemplary implementation, in a training process of an antenna weight (also referred to as pre-coding or beam), a high frequency band sending end sends a training pilot, and a receiving end receives a channel and executes channel estimation. Then, the high frequency band receiving end needs to feed back channel state information to the training sending end, so that the receiving end and the sending end can find, from candidate antenna weight pairs of the receiving end and the sending end, multiple antenna weight pairs of the receiving end and the sending end required for multi-path data transmission, thereby improving the overall spectrum efficiency.

In the embodiments of the present disclosure, flexible QCL-oriented power parameter, phase parameter and port number configuration are supported, thereby avoiding the problems of repeated resource configuration, large amount of RRC signaling overhead and limited downlink coverage.

By means of the embodiments of the present disclosure, by supporting QCL-oriented power, phase and port number configuration, resource utilization efficiency and configuration flexibility in a millimeter wave system are significantly improved, thereby effectively saving overhead of RRC resource reconfiguration signaling. In addition, since a plurality of antenna panels are supported to serve the same antenna port, the diversity gain of downlink transmission is improved and effective downlink coverage is ensured.

It should be noted that the reference signal described in the embodiments of the present disclosure includes at least one of: a Channel State Information Reference Signal (CSI-RS), a Channel State Information-Interference Measurement (CSI-IM), a Demodulation Reference Signal (DMRS), a Downlink Demodulation Reference Signal (DL DMRS), an Uplink Demodulation Reference Signal (UL DMRS), a Sounding Reference Signal (SRS), a Phase Tracking Reference Signal (SS-RS or PTRS), a Random Access Channel (RACH) signal, a Synchronization Signal (SS), a Synchronization Signal block (SS block or SS/PBCH block), a Primary Synchronization Signal (PSS), and a Secondary Synchronization Signal (SSS).

In an exemplary implementation, the uplink reference signal includes at least one of: a DMRS, a UL DMRS, a UL PT-RS, an SRS and a Physical Random Access Channel (PRACH)).

In an exemplary implementation, the downlink reference signal includes at least one of: a DMRS, a DL DMRS, a DL PT-RS, a CSI-RS and an SS block.

In an exemplary implementation, the beam may be a resource, for example, may be a reference signal resource, a sending end spatial filter, a receiving end spatial filter, a sending end pre-coding, a receiving end pre-coding, an antenna port, an antenna weight vector, an antenna weight matrix, and the like. A beam sequence number may be replaced with a resource index, such as a reference signal resource index, because transmission of the beam may be bound with transmission of certain time-frequency code resources. The beam may also be a transmission mode, such as a sending mode or a receiving mode. The transmission mode may include space division multiplexing, frequency domain or time domain diversity, etc.

A base station can perform Quasi Co-location (QCL) configuration for two reference signals, and notifies a user end of the QCL configuration to describe a channel feature hypothesis. The parameters related to the QCL include at least one of: Doppler spread, Doppler shift, delay spread, average delay, average gain and spatial parameters. The spatial parameters may include a Spatial Rx Parameter, for example, an angle of arrival, a spatial correlation of a received beam, an average delay, and a correlation (including phase information) of a time-frequency channel response.

The antenna group may be at least one of: a beam group, an antenna port group, an antenna panel, a panel, a UE panel and a reference signal resource group.

In an exemplary implementation, the beam group may refer to a group satisfying the following conditions: beams within one group can may be sent or received simultaneously, and/or beams within different groups cannot be sent or received simultaneously.

In an exemplary implementation, the antenna group may refer to a group satisfying the following conditions: beams within one group cannot be sent or received simultaneously, and/or beams within different groups can be sent or received simultaneously.

In an exemplary implementation, the antenna group may refer to a group satisfying the following conditions: more than N beams within one group can be sent or received simultaneously, and/or no more than N beams within one group can be sent or received simultaneously, where N is an integer greater than or equal to 1.

It should be noted that, in an exemplary implementation, a power parameter of a reference signal is used for indicating a sending power of the reference signal, or is used for compensating a measurement result under the reference signal. For example, the power parameter of the reference signal may be used for compensating a feedback result of a Channel Quality Indicator (CQI) of a Physical Downlink Share Channel (PDSCH) under the hypothesis of a basis transmission parameter (for example, the hypothesis that when performing PDSCH transmission based on a basis transmission parameter (also referred to as reference transmission parameter), a base station will additionally compensate +6 (decibel) dB sending power, and then a CQI value under the reference signal is obtained).

It should be noted that, in an exemplary implementation, the phase parameter of the reference signal may refer to a phase parameter between the reference signals, or a phase parameter of the reference signal to a target channel or a target reference signal.

It should be noted that, in an exemplary implementation, the number of ports of the reference signal may refer to the number of ports providing the reference signal. In at least one exemplary implementation, the number of ports of the PT-RS is provided for the PT-RS, and the association relationship between the PT-RS ports and the DMRS port groups is determined.

In an exemplary implementation, a method for receiving a reference signal performed by a first communication node is provided. The first communication node may be a UE. The method includes: the first communication node receives first information sent by a second communication node, wherein the first information includes a power parameter and/or a phase parameter and/or the number of ports of a reference signal, wherein the second communication node may be a base station such as a next generation NodeB (gNB); and the first communication node receives the reference signal sent by the second communication node, wherein the reference signal includes a reference signal resource, a reference signal port or a reference signal port group.

In an exemplary implementation, the first information is associated with an antenna set; or, the first information is associated with a beam group.

In an exemplary implementation, the power parameter and/or the phase parameter is associated with a QCL state.

In an exemplary implementation, the QCL state includes at least one of: Doppler spread, Doppler shift, delay spread, average delay, average gain and spatial parameters.

In an exemplary implementation, in a case where the QCL state includes first-type QCL information and second-type QCL information, the power parameter is associated with the first-type QCL information. The first-type QCL information consists of a basis reference signal and a QCL type, and the power parameter is associated with the basis reference signal in the first-type QCL information. In an exemplary implementation, in a case where the QCL state includes first-type QCL information and second-type QCL information, the phase parameter is associated with the first-type QCL information. The QCL type associated with the first-type QCL information includes at least one of: Doppler spread, Doppler shift, delay spread, average delay, and average gain. The QCL type associated with the second-type QCL information is a spatial parameter feature.

In an exemplary implementation, the basis reference signal associated with the first-type QCL information is the same as the basis reference signal associated with the second-type QCL information.

In an exemplary implementation, the phase parameter is relative phase information of a basis reference signal to the reference signal. In an exemplary implementation, the phase parameter is relative phase information between reference signals. In an exemplary implementation, the phase parameter is phase information of the reference signal.

In an exemplary implementation, in a case where the reference signal is a DMRS, the phase parameter provides phase information of a port of the DMRS to a channel port; or, the phase parameter provides phase information of a port of the DMRS to a channel layer.

In an exemplary implementation, the power parameter is a sending power of the reference signal. In an exemplary implementation, the power parameter is relative power information of a basis reference signal to the reference signal. In an exemplary implementation, the power parameter is relative power information of the reference signal to a target signal. In an exemplary implementation, the power parameter is an additional offset of a measurement result of the reference signal.

In an exemplary implementation, the first information is carried by MAC-CE signaling or RRC signaling.

In an exemplary implementation, the first information is applied to a reference signal associated with a trigger state; or, the first information is applied to a reference signal associated with a reporting configuration.

In an exemplary implementation, the MAC-CE may also be used for activation of a QCL state associated with PDSCH.

In an exemplary implementation, the first information includes the number of ports of a phase tracking reference signal.

In an exemplary implementation, a corresponding relationship between the ports of the phase tracking reference signal and the ports of the DMRS may be determined according to the first information.

In an exemplary implementation, the first communication node determines, according to the first information, a Signal-to-Interference-plus-Noise Ratio (SINR) and/or a Reference Signal Received Power (RSRP); and the first communication node reports the value of SINR or RSRP to the second communication node.

In an exemplary implementation, the value of the SINR or the RSRP is determined according to a power parameter in the first information. In an exemplary implementation, the value of the SINR or RSRP is determined according to the value of a measured SINR or a measured RSRP and the power parameter in the first information.

In an exemplary implementation, the reference signal includes one or a combination of a CSI-RS for channel measurement and a Channel State Information Reference Signal for Interference Measurement (CSI-RS for IM).

In an exemplary implementation, the power parameter includes a power offset or a sending power.

In an exemplary implementation, the power parameter is a specific value or 0 in a case where the power parameter is not configured.

In an exemplary implementation, the phase parameter includes a relative phase between reference signals. In an exemplary implementation, in a case where the phase parameter is not configured, the phase parameter is a specific value or 0.

In an exemplary implementation, the reference signal includes one of: a CSI-RS, a Channel State Information Interference Measurement signal (CSI-IM), a DMRS, or a PT-RS.

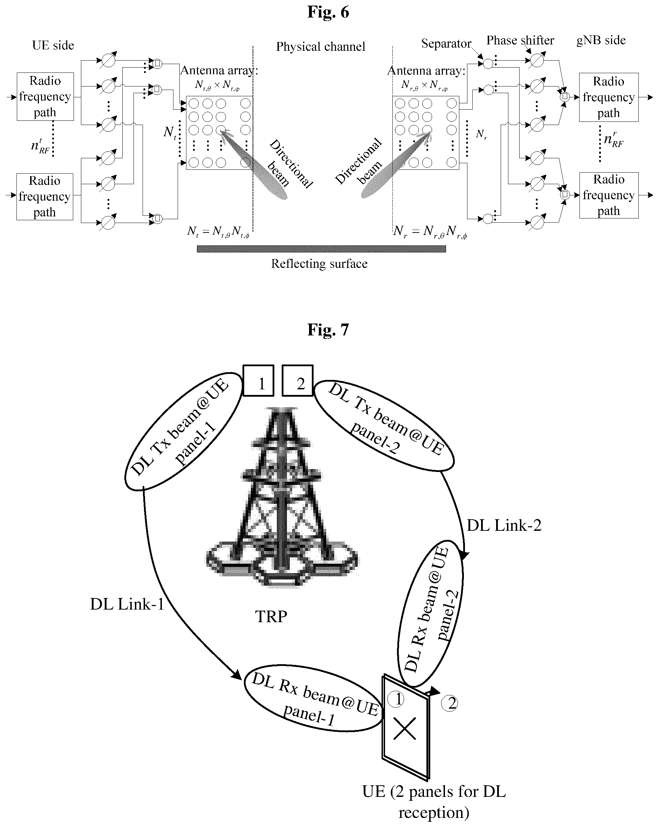

Fig. 6 is a schematic structural diagram of a hybrid precoding (beamforming) transceiver according to an exemplary embodiment of the present disclosure. As shown in Fig. 6, a sending end and a receiving end of the system are configured with multiple antenna units and multiple radio frequency links. Each radio frequency link is connected to an antenna array unit, or may also be partially connected to the antenna array unit. Each antenna unit has a digital keying phase shifter. The high frequency band system realizes the beamforming of the analog end by means of loading the signals on each antenna unit with different phase shifts. In a hybrid beamforming transceiver, there are multiple radio frequency signal streams. Each signal stream is loaded with a pre-coded Antenna Weight Vector (AWV) via a digital keying phase shifter, and is then sent from a multi-antenna unit to a high frequency band physical channel. At the receiving end, radio frequency signal streams received by a multi-antenna unit are weighted and combined into a single signal stream, and after performing radio frequency demodulation on the signal stream, the receiving end finally obtains multiple received signal streams, which are sampled and received by a digital baseband.

In a case where Transmit Receive Point (TRP)/UE has a plurality of antenna groups, each antenna group may generate a corresponding sending beam or a receiving beam. Fig. 7 is a schematic diagram of downlink transmission of a plurality of antenna groups according to an exemplary embodiment of the present disclosure. As shown in Fig. 7, for example, an antenna group-1 (also referred to as panel-1) of a TRP and an antenna group-1 of a UE generate sending and receiving beams respectively for serving a DL link-1; and an antenna group-2 of the TRP and an antenna group-2 of the UE generate sending and receiving beams respectively for serving a DL link-2. DL link-1 and DL link-2 may be associated with two different antenna ports, respectively, or DL link-1 and DL link-2 may be associated with the same antenna port.

The following describes an application scenario in which a multi-QCL-state is merged into one reference signal port (group).

A method for receiving a reference signal is performed by a first communication node. The first communication node is, for example, a UE. The method includes: first information sent by a second communication node is received, wherein the first information includes a power parameter and/or a phase parameter and/or the number of ports of a reference signal; and the reference signal sent by the second communication node is received, wherein the reference signal includes a reference signal resource, a reference signal port or a reference signal port group. In at least one exemplary implementation, the reference signal includes one of: a CSI-RS, a CSI-IM, a DMRS, or a PT-RS.

In an exemplary implementation, the first information is associated with an antenna group. The first information is used for determining a transmission mode associated with the antenna group. For example, the first information may be associated with an antenna group index, so that when using parameters related to the antenna group, the transmission mode can be determined according to the first information.

In an exemplary implementation, the first information is associated with a beam group.

In an exemplary implementation, the first information includes at least one of: a power parameter associated with a QCL state, and a phase parameter associated with a QCL state.

In an exemplary implementation, the QCL state includes one or a combination of the following: Doppler spread, Doppler shift, delay spread, average delay, average gain and spatial parameters.

In an exemplary implementation, in a case where the QCL state includes first-type QCL information and second-type QCL information, the power parameter is associated with the first-type QCL information (for example, QCL Type-A). In an exemplary implementation, in a case where the QCL state includes first-type QCL information and second-type QCL information, the phase parameter is associated with the first-type QCL information (for example, QCL Type-A). The first-type QCL information includes at least one of: Doppler spread, Doppler shift, delay spread, average delay, and average gain. The first-type QCL information may also be referred to as QCL Type-A, QCL Type-B, QCL Type-C. The second-type QCL information is a spatial parameter feature. The second-type QCL information may also be referred to as a QCL Type-D parameter.
'QCL Type-A' includes {Doppler shift, Doppler spread, average delay, delay spread}.
'QCL Type-B' includes {Doppler shift, Doppler spread}.
'QCL Type-C' includes {Doppler shift, average delay}.
'QCL Type-D' includes {space parameter}.

In an exemplary implementation, a basis reference signal associated with the first-type QCL information is the same as a basis reference signal associated with the second-type QCL information.

In an exemplary implementation, the phase parameter provides relative phase information of a basis reference signal to the reference signal, or relative phase information between reference signals, or relative phase information of the reference signal to a target signal, or a combination of any one or more of the foregoing.

In an exemplary implementation, in a case where the reference signal is a DMRS, the phase parameter provides phase information of a port of the DMRS to a channel port, or provides phase information of a port of the DMRS to a channel layer, or provides both.

In an exemplary implementation, the power parameter provides at least one of: a sending power of the reference signal, relative power information of a basis reference signal to the reference signal, relative power information of the reference signal to a target signal, or an additional offset of a measurement result of the reference signal.

In an exemplary implementation, in a case where the power parameter is not configured, the power parameter is a specific value or 0.

In an exemplary implementation, the phase parameter includes a relative phase between reference signals.

In an exemplary implementation, in a case where the phase parameter is not configured, the phase parameter is a specific value or 0.

In an exemplary implementation, the reference signal includes one of: a CSI-RS, a CSI-IM, a DMRS, or a PT-RS.

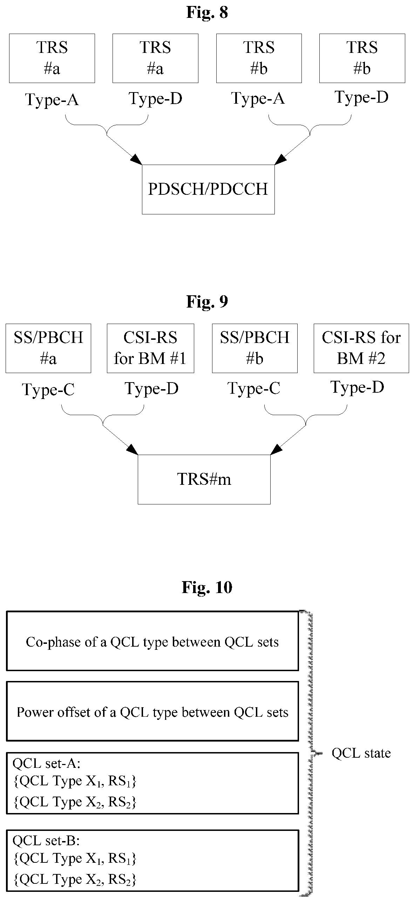

Fig. 8 is a schematic diagram of downlink transmission under multi-QCL-state indication according to an exemplary embodiment of the present disclosure. As shown in Fig. 8, orienting to the transmission of a Physical Downlink Share Channel (PDSCH) or a Physical Downlink Control Channel (PDCCH), one DMRS port or one port group is associated with (or applied to) two QCL states, wherein one QCL state includes {QCL Type-A, TRS#a} and {QCL Type-D, TRS#a}, and the other QCL state includes {QCL Type-A, TRS#b} and {QCL Type-D, TRS#b}. The TRS#a and the TRS#b represent basis reference signals of two QCL states, and a power parameter or a phase parameter between the two QCL states needs to be configured for supporting the subsequent receiving of the PDSCH/PDCCH.

From the perspective of receiver implementation, it is necessary to reasonably combine and optimize channel responses under a plurality of QCL hypothesis.

The first QCL state, DL Link-1: y1 = (a1^{∗}h1)^{∗}x + n.

Here, x is a reference signal sent by a base station; y1 is a reference signal received by a UE via a DL Link-1; h1 is a DL Link-1 channel response measured based on a TRS#a; a1 is an offset parameter (including phase or amplitude information, e.g. a phase configuration of +90 degrees, an amplitude increase of 3 dB) for transmission of a target channel (PDSCH/PDCCH) relative to TRS#a; and n is noise.

It should be noted that, the phase information is the relative phase information of the reference signal to a target signal, and the amplitude information is the relative amplitude information of the reference signal to a target signal.

The second QCL state, DL Link-2: y2 = (a2^{∗}h2)^{∗}x + n.

Here, x is a reference signal sent by a base station; y2 is a reference signal received by a UE via a DL Link-2; h2 is a DL Link-2 channel response measured based on a TRS#b; a2 is an offset parameter for transmission of a target channel (PDSCH/PDCCH) relative to TRS#b; and n is noise.

The parameters h1 and h2 are known to the UE, but a1 and a2 need to be notified to the UE by the base station.

After the UE obtains the a1 and a2 parameters, the UE may perform reception through a receiving algorithm, for example, for an RAKE receiver, y = (a1^{∗}h1)^{H ∗} y1 + (a2^{∗}h2)^{H ∗} y2, wherein y is a reference signal finally received by the UE, (a1^{∗}h1)^{H} represents a conjugate transposition matrix of a1^{∗}h1, and (a2^{∗}h2)^{H} represents a conjugate transposition of a2^{∗}h2.

Fig. 9 is a schematic diagram of another downlink transmission under multi-QCL-state indication according to an exemplary embodiment of the present disclosure. As shown in Fig. 9, two QCL states are associated (or applied) with respect to a reference signal TRS#m, wherein one QCL state includes {QCL Type-C, SS/PBCH#a} and {QCL Type-D, CSI-RS for BM#1}, and the other QCL state includes {QCL Type-C, SS/PBCH#b} and {QCL Type-D, CSI-RS for BM#2}. In a case where two basis reference signals under one QCL state are different, the first information (e.g., the power parameter, or the phase parameter) is associated to a basis reference signal corresponding to QCL Type C, i.e., SS/PBCH#a and SS/PBCH#b in the figure.

In an exemplary implementation, in order to support multi-beam simultaneous transmission of a PDCCH or a PDSCH, the reference signal TRS#m may be taken as a basis reference signal of the QCL and configured to a DMRS port or a port group of the PDCCH or the PDSCH.

Fig. 10 is a schematic diagram of a QCL state under a phase and power parameter configuration according to an exemplary embodiment of the present disclosure. As shown in Fig. 10, for one QCL state, two QCL sets are included, i.e. QCL set-A and QCL set-B, and each QCL set includes two QCL types and corresponding basis RS (also referred to as reference RS). In addition, the QCL state further includes a phase parameter and a power parameter, wherein the phase parameter provides a relative phase difference between reference signals of two QCL parameter sets, and the power parameter provides a relative power difference between reference signals of two QCL sets.

The following description explains the signaling design of the embodiments of the present disclosure, including a trigger state, a ReportConfig and a PT-RS parameter update.

In an exemplary implementation, the first information is carried by MAC-CE signaling or RRC signaling.

In an exemplary implementation, the first information is applied to a reference signal associated with a trigger state. Alternatively, in an exemplary implementation, the first information is applied to a reference signal associated with a reporting configuration.

In an exemplary implementation, the MAC-CE is further used for activation of the QCL state associated with a PDSCH.

In an exemplary implementation, the first information includes the number of ports of a phase tracking reference signal. In order to counteract a strong phase noise influence (for example, in a millimeter wave communication (also referred to as Frequency range 2, or Above 6 GHz) system), a base station needs to configure a phase tracking reference signal separately for a TRP or a panel of each base station. Considering that the MAC-CE signaling is used for integrating a multi-QCL-state into a combined state (or becoming a new state), the number of the ports of the phase tracking reference signal needs to be provided together by the MAC-CE signaling.

In an exemplary implementation, a corresponding relationship between the port of the phase tracking reference signal and the DMRS port, or between the port of the phase tracking reference signal and the DMRS port group is determined according to the first information, for example, the corresponding relationship is set up according to an ascending order of sequence numbers. For example, assuming that the phase tracking reference signal corresponds to a port 0 and a port 1, and a DMRS port group is a Code Division Multiplexing (CDM) group 2 and a CDM group 3, then port 0 of the phase tracking reference signal is associated with the CDM group 2, and port 1 of the phase tracking reference signal is associated with the CDM group 3.

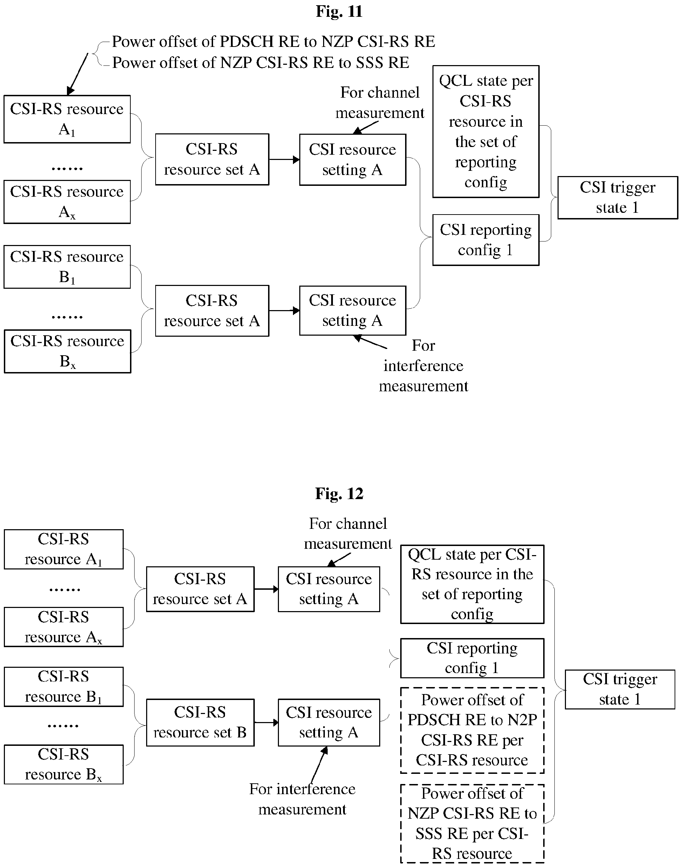

Fig. 11 is a schematic diagram of a framework of non-periodic CSI trigger state configuration in the related art. In the non-periodic CSI trigger state configuration in the related art, a plurality of CSI-RS resources are combined into one CSI-RS resource set, and the one CSI-RS resource set is associated with one CSI resource setting (also referred to as CSI-RS resource config). One or more CSI resource settings may be associated with one CSI reporting configuration. In a case where one CSI reporting config is associated with a plurality of CSI resource settings, the plurality of CSI resource settings may be respectively used for channel measurement or interference measurement. A QCL state for each associated non-periodic CSI-RS needs to be additionally provided in the CSI reporting config. A power offset (referred to as Pc) of a PDSCH RE (Resource Element) to the CSI-RS (Non-Zero-Power (NZP) CSI-RS in Fig. 11) and a power offset (referred to as PSS) of an NZP CSI-RS RE to the SSS RE are configured on the CSI-RS resource.

In an exemplary implementation, while flexibly adjusting the QCL state of the non-periodic CSI-RS, the base station does not have the right to adjust the power parameter of the non-periodic CSI-RS, and thus it is difficult for the base station to flexibly adjust the number of antenna groups serving the transmission (with the increase of the number of serving antenna panels, the transmission power will be further increased, but the number of different beams for simultaneously serving multiple users will be limited).

Fig. 12 is a schematic diagram of a framework of trigger state-oriented phase and power parameter configuration according to an exemplary embodiment of the present disclosure. As shown in Fig. 12, a power offset Pc of a PDSCH RE to an NZP-CSI-RS RE and a power offset PSS of an NZP-CSI-RS RE to an SSS RE may be configured on a CSI-RS trigger state. In this way, the base station can provide corresponding power parameter information while flexibly configuring the QCL state of the non-periodic CSI-RS.

In an exemplary implementation, in a case where a plurality of CSI-RS resource settings are included, a power parameter needs to be configured for each CSI-RS resource under the plurality of CSI-RS resource settings; or a group of power parameters (including a power offset Pc of a PDSCH RE to an NZP-CSI-RS RE or a power offset PSS of an NZP-CSI-RS RE to an SSS RE) needs to be configured for the plurality of CSI-RS resource settings, and the group of power parameters is applied to all the CSI-RS resources under the CSI resource settings.

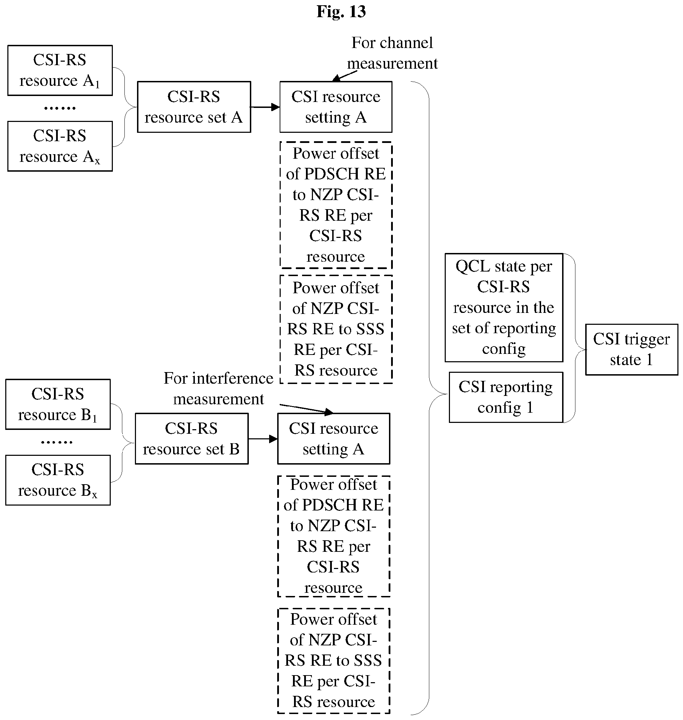

Fig. 13 is a schematic diagram of a framework of CSI reporting configuration-oriented phase and power parameter configuration according to an exemplary embodiment of the present disclosure. As shown in Fig. 13, a power offset Pc of a PDSCH RE to an NZP-CSI-RS RE and a power offset PSS of an NZP-CSI-RS RE to an SSS RE can be configured on a CSI reporting configuration (namely, different CSI resource settings have their respective independent power parameters). For non-periodic CSI reporting configurations, the corresponding CSI-RS from multiple CSI resource settings needs to have the same QCL state.

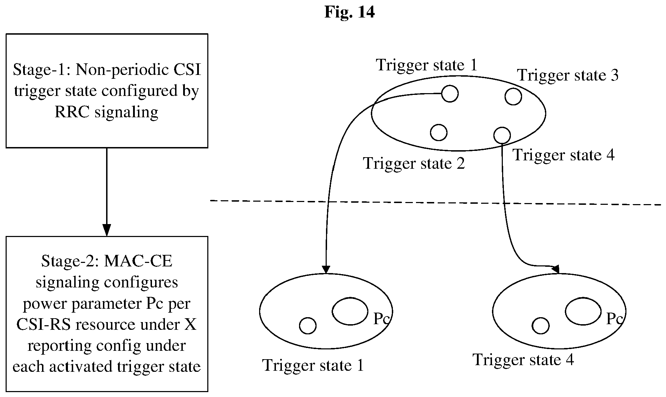

Fig. 14 is a flowchart of activating a power parameter by a MAC-CE according to an exemplary embodiment of the present disclosure. As shown in Fig. 14, a plurality of non-periodic CSI trigger states are configured in RRC signaling, and one or more trigger states are activated in MAC-CE signaling. The MAC-CE signaling provides the Pc parameter of each CSI-RS resource under the reporting configuration under each activated trigger state.

In an exemplary implementation, a power offset may be used for the determination of L1-SINR/ L1-RSRP (Channel Measurement Resource (CMR) and Interference Measurement Resource (IMR)).

A first communication node (e.g. a UE) determines a value of an SINR or RSRP according to first-type information; and then the first communication node reports the value of SINR or RSRP to a second communication node (e.g., a base station).

In an exemplary implementation, the value of the SINR or the RSRP is determined according to a power parameter in the first information.

In an exemplary implementation, the value of the SINR or the RSRP is determined according to a measured SINR or a measured RSRP, and the power parameter in the first information.

In an exemplary implementation, the reference signal includes one or a combination of a CSI-RS for channel measurement and a CSI-RS for IM for interference measurement.

In an exemplary implementation, a step associated with a report codeword of the signal-to-interference-plus-noise ratio is determined by at least one of the following parameters: a reference signal type associated with the signal-to-interference-plus-noise ratio, and a report type associated with the signal-to-interference-plus-noise ratio.

The reference signal type includes at least one of: a zero-power channel state information reference signal for interference measurement; a non-zero-power channel state information reference signal for interference measurement; a zero-power channel state information reference signal for interference measurement and a non-zero-power channel state information reference signal for interference measurement; or a reference signal for channel measurement.

The reference signal for channel measurement includes a synchronization signal or a channel state information reference signal.

The report type includes a group-based beam report, and a group-based beam report not enabled.

For example, the SINR report is based on a differential reporting mode, the maximum measured SINR value is reported using an absolute value, and the other SINR values are reported based on a differential value relative to the maximum measured SINR value. However, the difference value is carried, for example, by 4 bits, and therefore a step value corresponding to each adjacent code word (for example, from 4'b0000 to 4'b0001) is related to the reporting configuration. The step value is determined by reference signal types of different SINR reports, for example, in a case where the associated reference signal is a reference signal (also referred to as channel measurement resource, CMR) only for channel measurement, the step of each adjacent code word is 2dB; and in a case where the associated reference signal is a CMR and a non-zero-power interference measurement resource (also referred to as NZP-IMR) for interference measurement, the step of each adjacent code word is 0.5dB.

Through the description of the foregoing embodiments, a person having ordinary skill in the art can understand that the method according to the foregoing embodiments may be implemented by software in combination with a universal hardware platform, and definitely may also be implemented by hardware. Based on such understanding, the technical solutions of the embodiments of the present disclosure can essentially be embodied in the form of a software product. The computer software product is stored in a storage medium (such as a ROM/RAM, a magnetic disk, or an optical disk), and includes several instructions for enabling a terminal device (which may be a mobile phone, a computer, a server, or a network device) to execute the methods described in the embodiments of the present disclosure.

### Embodiment 2

The embodiment of the present disclosure provides a computer-readable storage medium. The computer-readable storage medium stores a computer program, and the computer program executes operations in any one of the foregoing method embodiments at runtime.

In at least one exemplary implementation of the embodiment, the described computer-readable storage medium may be configured to store a computer program for executing the following operations S1 and S2.

At S1, first information sent by a second communication node is received, wherein the first information is used for indicating a signal parameter of a reference signal.

At S2, the reference signal sent by the second communication node is received according to the first information.

By means of the operations, first information sent by a second communication node is received, wherein the first information is used for indicating a signal parameter of a reference signal; and the reference signal sent by the second communication node is received according to the first information. By means of the solution, the problem in the related art that a UE cannot obtain information related to a reference signal influences reception of the reference signal by the UE can be solved, and the effect of improving reception efficiency of the reference signal can be achieved.

In at least one exemplary implementation of the embodiment, the storage medium may include, but is not limited to, any medium that is able to store a computer program, such as a USB flash drive, a Read-Only Memory (ROM), a Random Access Memory (RAM), a removable hard disk, a magnetic disk, or an optical disc.

The embodiment of the present disclosure provides a computer-readable storage medium. The computer-readable storage medium stores a computer program, and the computer program executes operations in any one of the foregoing method embodiments at runtime.

In at least one exemplary implementation of the embodiment, the described computer-readable storage medium may be configured to store a computer program for executing the following operations S1 and S2.

At S1, first information is sent, wherein the first information is used for indicating a signal parameter of a reference signal, and the first information is used for indicating a first communication node to receive, according to the first information, the reference signal sent by a second communication node.

At S2, a reference signal is sent.

By means of the described operations, first information is sent, wherein the first information is used for indicating a signal parameter of a reference signal, and the first information is used for indicating a first communication node to receive, according to the first information, the reference signal sent by the second communication node; and the reference signal is sent. By means of the solution, the problem in the related art that a UE cannot obtain information related to a reference signal influences reception of the reference signal by the UE can be solved, and the effect of improving reception efficiency of the reference signal can be achieved.

In at least one exemplary implementation of the embodiment, the storage medium may include, but is not limited to, any medium that is able to store a computer program, such as a USB flash drive, an ROM, an RAM, a removable hard disk, a magnetic disk, or an optical disc.

The embodiment of the present disclosure provides an electronic apparatus, including a memory and a processor, wherein the memory stores a computer program, and the processor is configured to run the computer program to execute the operations in any one of the method embodiments.

In at least one exemplary implementation, the electronic apparatus may further include a transmission device and an input/output device, wherein the transmission device is connected to the processor, and the input/output device is connected to the processor.

In at least one exemplary implementation of the embodiment, the processor may be configured to perform the following operations S1 and S2 by means of a computer program.

At S1, first information sent by a second communication node is received, wherein the first information is used for indicating a signal parameter of a reference signal.

At S2, the reference signal sent by the second communication node is received according to the first information.

By means of the operations, first information sent by a second communication node is received, wherein the first information is used for indicating a signal parameter of a reference signal; and the reference signal sent by the second communication node is received according to the first information. By means of the solution, the problem in the related art that a UE cannot obtain information related to a reference signal influences reception of the reference signal by the UE can be solved, and the effect of improving reception efficiency of the reference signal can be achieved.

For specific examples of the embodiment, reference may be made to the examples described in the foregoing embodiments and exemplary implementations, and details are not repeatedly described herein in this embodiment.

The embodiment of the present disclosure provides an electronic apparatus, including a memory and a processor, wherein the memory stores a computer program, and the processor is configured to run the computer program to execute the operations in any one of the method embodiments.

In at least one exemplary implementation, the electronic apparatus may further include a transmission device and an input/output device, wherein the transmission device is connected to the processor, and the input/output device is connected to the processor.

In at least one exemplary implementation of the embodiment, the processor may be configured to perform the following operations S1 and S2 by means of a computer program.

At S1, first information is sent, wherein the first information is used for indicating a signal parameter of a reference signal, and the first information is used for indicating a first communication node to receive, according to the first information, the reference signal sent by a second communication node.

At S2, the reference signal is sent.

By means of the described operations, first information is sent, wherein the first information is used for indicating a signal parameter of a reference signal, and the first information is used for indicating a first communication node to receive, according to the first information, the reference signal sent by the second communication node; and the reference signal is sent. By means of the solution, the problem in the related art that a UE cannot obtain information related to a reference signal influences reception of the reference signal by the UE can be solved, and the effect of improving reception efficiency of the reference signal can be achieved.

For specific examples of the embodiment, reference may be made to the examples described in the foregoing embodiments and exemplary implementations, and details are not repeatedly described herein in this embodiment.

It is apparent that a person having ordinary skill in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

## Claims

1. A method for receiving a reference signal, performed by a first communication node and comprising:
receiving first information sent by a second communication node, wherein the first information is used for indicating a signal parameter of a reference signal; and
receiving, according to the first information, the reference signal sent by the second communication node.

2. The method according to claim 1, wherein receiving, according to the first information, the reference signal sent by the second communication node comprises:
receiving, according to the first information and a Quasi Co-Location, QCL, state, the reference signal sent by the second communication node, wherein the reference signal is associated with at least two QCL states.

3. The method according to claim 2, wherein receiving, according to the first information, the reference signal sent by the second communication node further comprises:
in a case where a first QCL state associated with the reference signal comprises first-type QCL information and second-type QCL information, associating the first information with the first-type QCL information, wherein the first-type QCL information comprises at least one of: Doppler spread, Doppler shift, delay spread, average delay, and average gain, and the second-type QCL information comprises a spatial parameter feature.

4. The method according to claim 2, wherein in a case where a first QCL state associated with the reference signal comprises first-type QCL information and second-type QCL information, a basis reference signal associated with the first-type QCL information is the same as a basis reference signal associated with the second-type QCL information.

5. The method according to claim 1, wherein the first information is carried on first signaling sent by the second communication node, wherein the first information is used for indicating a signal parameter of a reference signal associated with a trigger state configured in the first signaling, or the first information is used for indicating a signal parameter of a reference signal associated with a reporting configuration in the first signaling.

6. The method according to claim 5, wherein the first signaling comprises Media Access Control-Control Element, MAC-CE, signaling or Radio Resource Control, RRC, signaling.

7. The method according to claim 5, further comprising:
receiving the first signaling; and
activating, according to the first signaling, a QCL state associated with a physical downlink shared channel.

8. The method according to claim 1, further comprising:
determining, according to the first information, at least one of a signal-to-interference-plus-noise ratio and a reference signal received power, and sending the determined at least one of the signal-to-interference-plus-noise ratio and the reference signal received power to the second communication node.

9. The method according to claim 8, wherein determining, according to the first information, at least one of the signal-to-interference-plus-noise ratio and the reference signal received power comprises:
determining, according to a power parameter of the reference signal contained in the first information, at least one of the signal-to-interference-plus-noise ratio and the reference signal received power.

10. The method according to claim 8, wherein determining, according to the first information, at least one of the signal-to-interference-plus-noise ratio and the reference signal received power comprises at least one of:
determining the signal-to-interference-plus-noise ratio according to a measured signal-to-interference-plus-noise ratio and a power parameter of the reference signal contained in the first information; and
determining the reference signal received power according to a measured reference signal received power and a power parameter of the reference signal contained in the first information.

11. The method according to claim 8, wherein a step associated with a report codeword of the signal-to-interference-plus-noise ratio is determined by at least one of:
a reference signal type associated with the signal-to-interference-plus-noise ratio; and
a report type associated with the signal-to-interference-plus-noise ratio.

12. The method according to claim 11, wherein the reference signal type comprises at least one of:
a zero-power channel state information reference signal for interference measurement;
a non-zero-power channel state information reference signal for interference measurement;
a zero-power channel state information reference signal for interference measurement and a non-zero-power channel state information reference signal for interference measurement; and
a reference signal for channel measurement,
wherein the reference signal for channel measurement comprises a synchronization signal or a channel state information reference signal.

13. The method according to claim 11, wherein the report type comprises: a group-based beam report, and a group-based beam report not enabled.

14. The method according to any one of claims 8 to 13, wherein the reference signal comprises at least one of a channel state information reference signal for channel measurement and a channel state information reference signal for interference measurement.

15. The method according to any one of claims 1 to 8, wherein the first information comprises at least one of:
a power parameter of the reference signal, a phase parameter of the reference signal, a number of ports of the reference signal, and a number of ports of a phase tracking reference signal.

16. The method according to claim 15, wherein the phase parameter of the reference signal comprises at least one of: relative phase information of a basis reference signal to the reference signal, relative phase information between reference signals, and phase information of the reference signal.

17. The method according to claim 15, wherein the power parameter of the reference signal comprises at least one of: a sending power of the reference signal, relative power information of a basis reference signal to the reference signal, relative power information of the reference signal to a target signal, an additional offset of a measurement result of the reference signal, and a power offset.

18. The method according to claim 15, wherein in a case where the reference signal is a demodulation reference signal, the phase parameter of the reference signal comprises: phase information of a port of the demodulation reference signal to a port of a channel, or phase information of a port of the demodulation reference signal to a layer of a channel.

19. The method according to claim 15, wherein in a case where the first information comprises the number of the ports of the phase tracking reference signal, the method further comprises:
determining, according to the number of the ports of the phase tracking reference signal, a corresponding relationship between the ports of the phase tracking reference signal and ports of a demodulation reference signal.

20. The method according to claim 15, wherein in a case where the first information does not comprise the power parameter of the reference signal, the power parameter is a specified value or is set to 0; or,
in a case where the first information does not comprise the phase parameter of the reference signal, the phase parameter is a specified value or is set to 0.

21. The method according to any one of claims 1 to 8, wherein the reference signal comprises at least one of: a reference signal resource, a reference signal port, and a reference signal port group.

22. The method according to any one of claims 1 to 8, wherein the first information is information associated with at least one of an antenna group and a beam group.

23. The method according to any one of claims 1 to 8, wherein the reference signal comprises one of: a channel state information reference signal, a channel state information interference measurement signal, a demodulation reference signal, or a phase tracking reference signal.

24. A method for sending a reference signal, performed by a second communication node and comprising:
sending first information, wherein the first information is used for indicating a signal parameter of a reference signal, and the first information is used for indicating a first communication node to receive, according to the first information, the reference signal sent by the second communication node; and
sending the reference signal.

25. The method according to claim 24, wherein the first information is used for indicating the first communication node to receive, according to the first information and a Quasi Co-Location, QCL, state, the reference signal sent by the second communication node, wherein the reference signal is associated with at least two QCL states.

26. The method according to claim 25, wherein the first information is used for indicating the first communication node to associate, in a case where a first QCL state associated with the reference signal comprises first-type QCL information and second-type QCL information, the first information with the first-type QCL information, wherein the first-type QCL information comprises at least one of: Doppler spread, Doppler shift, delay spread, average delay, and average gain, and the second-type QCL information comprises a spatial parameter feature.

27. An apparatus for receiving a reference signal, comprising:
a first receiving module, configured to receive first information sent by a second communication node, wherein the first information is used for indicating a signal parameter of a reference signal; and
a second receiving module, configured to receive, according to the first information, the reference signal sent by the second communication node.

28. The apparatus according to claim 27, wherein the second receiving module comprises:
a first receiving sub-module, configured to receive, according to the first information and a Quasi Co-Location, QCL, state, the reference signal sent by the second communication node, wherein the reference signal is associated with at least two QCL states.

29. The apparatus according to claim 27, wherein the second receiving module further comprises:
a second receiving sub-module, configured to associate, in a case where a first QCL state associated with the reference signal comprises first-type QCL information and second-type QCL information, the first information with the first-type QCL information, wherein the first-type QCL information comprises at least one of: Doppler spread, Doppler shift, delay spread, average delay, and average gain, and the second-type QCL information comprises a spatial parameter feature.

30. The apparatus according to claim 27, wherein in a case where a first QCL state associated with the reference signal comprises first-type QCL information and second-type QCL information, a basis reference signal associated with the first-type QCL information is the same as a basis reference signal associated with the second-type QCL information.

31. The apparatus according to claim 27, further comprising:
a determining module, configured to determine, according to the first information, at least one of a signal-to-interference-plus-noise ratio and a reference signal received power; and
a sending module, configured to send the determined at least one of the signal-to-interference-plus-noise ratio and the reference signal received power to the second communication node.

32. The apparatus according to any one of claims 27 to 31, wherein the first information comprises at least one of:
a power parameter of the reference signal, a phase parameter of the reference signal, a number of ports of the reference signal, and a number of ports of a phase tracking reference signal.

33. An apparatus for sending a reference signal, comprising:
a first sending module, configured to send first information, wherein the first information is used for indicating a signal parameter of a reference signal, and the first information is used for indicating a first communication node to receive, according to the first information, the reference signal sent by a second communication node; and
a second sending module, configured to send the reference signal.

34. The apparatus according to claim 33, wherein the first information is used for indicating the first communication node to receive, according to the first information and a Quasi Co-Location, QCL, state, the reference signal sent by the second communication node, wherein the reference signal is associated with at least two QCL states.

35. The apparatus according to claim 33, wherein the first information is used for indicating the first communication node to associate, in a case where a first QCL state associated with the reference signal comprises first-type QCL information and second-type QCL information, the first information with the first-type QCL information, wherein the first-type QCL information comprises at least one of: Doppler spread, Doppler shift, delay spread, average delay, and average gain, and the second-type QCL information comprises a spatial parameter feature.

36. The apparatus according to any one of claims 33 to 35, wherein the first information comprises at least one of:
a power parameter of the reference signal, a phase parameter of the reference signal, a number of ports of the reference signal, and a number of ports of a phase tracking reference signal.

37. A computer-readable storage medium, wherein the computer-readable storage medium stores a computer program, and the computer program executes the method according to any one of claims 1 to 23 at runtime.

38. A computer-readable storage medium, wherein the computer-readable storage medium stores a computer program, and the computer program executes the method according to any one of claims 24 to 26 at runtime.

39. An electronic device, comprising a memory and a processor, wherein the memory stores a computer program, and the processor is configured to run the computer program to execute the method according to any one of claims 1 to 23.

40. An electronic device, comprising a memory and a processor, wherein the memory stores a computer program, and the processor is configured to run the computer program to execute the method according to any one of claims 24 to 26.
